# EUROPEAN PATENT APPLICATION

(11) **EP 4 831 775 A1**
(43) Date of publication of application: **28.10.2026**
(21) Application number: 26169365.9
(22) Date of filing: 31.03.2026
(51) Int. Cl.: G06F 3/01, G06F 3/0354, B60K 35/10

(54) **INTERFACE SYSTEM FOR VEHICLE**

(30) Priority: 22.04.2025 KR 20250052399
(71) Applicant: AUMOVIO Germany GmbH, 60488 Frankfurt am Main (DE)
(72) Inventor: Kim, BeomYeong, 339-942 Sejong-si (KR)
(74) Representative: Aumovio Corporation

(57) **Abstract**

An interface system for a vehicle according to the present invention includes: a touchpad; an electrostatic chuck that forms electrical adhesion between the touchpad and a body part; a power supply unit that supplies electric power to the electrostatic chuck; and a processor that detects the body part through the touchpad and supplies power to the electrostatic chuck through the power supply unit according to a detection result to form the electrical adhesion between the touchpad and the body part.

## Description

### [Technical Field]

The present invention relates to an interface system for a vehicle.

### [Background Art]

With the development of vehicles, a cockpit structure within the vehicle is becoming more diverse, and various convenient functions within a cockpit module and methods of operating the functions are provided for each vehicle.

Fo**r** example, when operating convenience devices within a cockpit module, conventional operation methods generally employ a touch-type display using an audio video navigation (AVN) system or a hard-type button switch (physical key). In particular, touchpads are mainly disposed on a center fascia control panel of the vehicle so that a driver may control an infotainment system, a navigation system, audio, and the like.

**However,** the touchpads only provide a simple experience to a driver due to limited types of haptic feedback technologies. In addition, since a user needs to visually check touch inputs, such as a cursor position of the touchpad, slider adjustment, or menu navigation, the user's attention may be diverted, thereby potentially impairing safe driving.

The background art of the present invention is disclosed in Korean Unexamined Patent Publication No. 10-2018-0068033 (June 21, 2018), entitled "VEHICLE TERMINAL AND METHOD FOR CONTROLLING OPERATION THEREOF".

### [Summary of the Invention]

### [Technical Problem]

**The** present invention has been devised to solve the above-described problems, and an object according to one aspect of the present invention is to provide an interface system for a vehicle, which provides immersive haptic feedback to a user by generating electrostatic adhesion between a surface of a touchpad and a body part of the user according to a position or pressure of the body part of the user, based on the Johnson-Rahbek effect.

### [Technical Solution]

**An** interface system for a vehicle according to one aspect of the present invention includes: a touchpad; an electrostatic chuck that forms electrical adhesion between the touchpad and a body part; a power supply unit that supplies power to the electrostatic chuck; and a processor that detects the body part through the touchpad and supplies the power to the electrostatic chuck through the power supply unit according to a detection result to form the electrical adhesion between the touchpad and the body part.

The electrostatic chuck according to the present invention may adjust the electrical adhesion between the touchpad and the body part according to a pressure applied by the body part to the touchpad.

The processor according to the present invention may adjust the electrical adhesion between the touchpad and the body part according to a gesture of the body part on the touchpad.

The gesture of the body part according to the present invention may include at least one of a swipe, a tap, a double tap, a press, a flick, a pan, a drag, a rotate, and a pinch-to-zoom.

The processor according to the present invention may adjust the electrical adhesion between the touchpad and the body part according to a position of the body part in the touchpad.

The processor according to the present invention may adjust the electrical adhesion between the touchpad and the body part according to a movement direction of the body part with respect to the touchpad.

The processor according to the present invention may adjust the electrical adhesion between the touchpad and the body part according to a user interface component displayed through the touchpad upon execution of an application.

The user interface component according to the present invention may include at least one of a button, an icon, a menu, a slider, an input window, and a border displayed through the touchpad.

The electrostatic chuck according to the present invention may be disposed on the touchpad and divided into a plurality of zones, and the processor may selectively supply the power to the zones through the power supply unit to adjust the electrical adhesion between the touchpad and the body part for each of the zones.

### [Advantageous Effects]

According to one aspect of the present invention, the interface system for a vehicle may provide immersive haptic feedback to a user by generating electrostatic adhesion between a surface of a touchpad and a body part of the user according to a position or pressure of the body part of the user, based on the Johnson-Rahbek effect.

According to another aspect of the present invention, the interface system for a vehicle may adjust adhesion according to the position or pressure of the body part to allow the user to intuitively recognize a positional change such as cursor movement or slider adjustment.

According to still another aspect of the present invention, the interface system for a vehicle may reduce the need for visual check upon operation of the touchpad to allow the user to focus more on driving.

According to still another aspect of the present invention, the interface system for a vehicle may provide the user with rich interaction scenarios for various applications.

### [Brief Description of the Drawings]

FIG. 1 is a block diagram of an interface system for a vehicle according to one embodiment of the present invention.
FIG. 2 is a configuration diagram of an electrostatic chuck according to one embodiment of the present invention.
FIG. 3 is a conceptual diagram illustrating an example of electric power supply to the electrostatic chuck according to one embodiment of the present invention.
FIG. 4 is a diagram illustrating a zone of the electrostatic chuck according to one embodiment of the present invention.
FIGS. 5 to 8 are diagrams illustrating examples of adjusting electrical adhesion according to one embodiment of the present invention.

### [Detailed Description of Invention]

Hereinafter, the embodiments of an interface system for a vehicle according to one embodiment of the present invention will be described. In this process, thicknesses of lines, sizes of components, and the like illustrated in the drawings may be exaggerated for clarity and convenience of description. Further, some terms which will be described below are defined in consideration of functions in the present invention and meanings may vary depending on, for example, a user or operator's intentions or customs. Therefore, the meanings of these terms should be interpreted based on the scope throughout the present specification.

The present invention may be implemented in various different forms and is not limited to the embodiments described herein. In the drawings, in order to clearly describe the present invention, portions which are not related to the description of the present invention are omitted and similar portions are denoted by similar reference numerals throughout the specification.

Throughout the specification, when a certain portion "includes" a certain component, this does not mean that other components are excluded and other components may be included unless otherwise noted.

The implementations described herein may be implemented, for example, as a method or process, a device, a software program, a data stream, or a signal. Although discussed only in the context of a single form of implementation (e.g., discussed only as a method), implementations of the features discussed may also be implemented in other forms (e.g., devices or programs). The device may be implemented with suitable hardware, software, firmware, or the like. The method may be implemented in a device such as, for example, a processor or the like that generally refers to a processing device including a computer, a microprocessor, an integrated circuit, a programmable logic device, or the like.

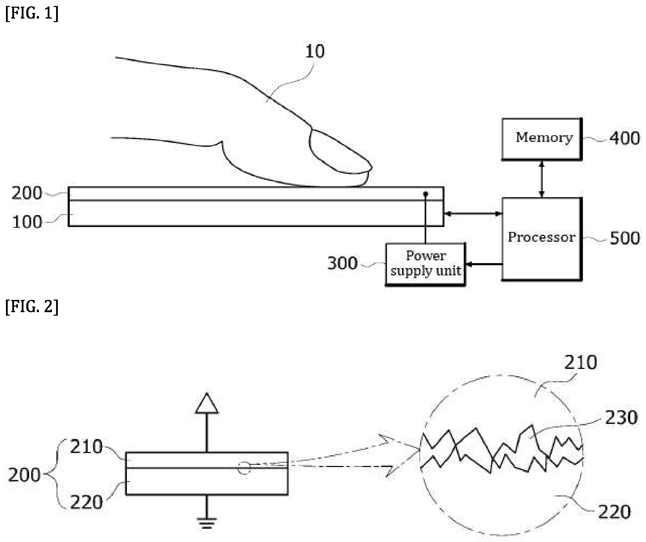

FIG. 1 is a block diagram of an interface system for a vehicle according to one embodiment of the present invention.

Referring to FIG. 1, the interface system for a vehicle according to one embodiment of the present invention may include a touchpad 100, an electrostatic chuck 200, a power supply unit 300, a memory 400, and a processor 500.

The touchpad 100 may be disposed on an instrument panel or center fascia of the vehicle. The touchpad 100 is combined with a display device so that a user may operate a partial area of a screen to implement a function assigned to the area of the screen. The touchpad 100 may increase user convenience by allowing a desired function to be selected and implemented by immediately touching an object displayed on a display. The touchpad 100 is obvious to those skilled in the art, and thus a detailed description thereof will be omitted.

The electrostatic chuck 200 is disposed on the touchpad 100 to form an electrostatic force according to the Johnson-Rahbeck effect, thereby forming electrical adhesion (Coulomic attraction) between the touchpad 100 and a body part. The body part may be a user's finger, or the like, and the finger is used as an example in the following explanation.

The electrical adhesion may be dynamically varied, thereby providing the user with a sticky tactile sensation that mimics real textures. For example, the electrostatic adhesion may be generated at a minimum or maximum level, and may also be adjusted to a precise level including high, medium, and low levels. The electrical adhesion allows the user to recognize physical boundaries or menu selections within the touchpad 100.

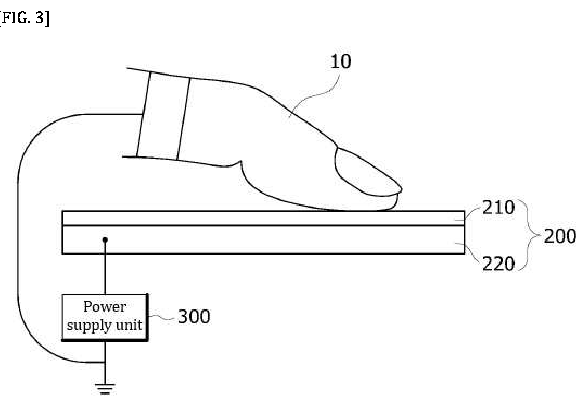

FIG. 2 is a configuration diagram of the electrostatic chuck according to one embodiment of the present invention, and FIG. 3 is a conceptual diagram illustrating an example of electric power supply to the electrostatic chuck according to one embodiment of the present invention.

Referring to FIGS. 2 and 3, the electrostatic chuck 200 may include a metal electrode and a semiconductor substrate 210. The electrostatic chuck 200 includes a metal electrode 220 and the semiconductor substrate 210, and may be disposed on the semiconductor substrate 210 on the metal electrode 220. The metal electrode 220 may receive power from the power supply unit 300 to form an electromagnetic field. A metal with excellent electrical conductivity, such as aluminum or copper, may be used as the metal electrode 220. The semiconductor substrate 210 has electrical resistance while being coated on the metal electrode 220, and may be formed of a composite ceramic such as Al₂O₃ doped with TiO₂. A minute gap 230 exists between the metal electrode 220 and the semiconductor substrate 210, and the gap 230 may act as a dielectric to cause the Johnson-Rahbeck effect. When the power is applied to the metal electrode 220, charges move to the semiconductor substrate 210 and the electrical adhesion may occur between the finger and the touchpad 100.

The electrostatic chuck 200 may be disposed on the entirety or portion of the touchpad 100 on the touchpad 100.

The electrostatic chuck 200 may be divided into a plurality of zones 240 on the touchpad 100. Each zone 240 may independently receive the power from the power supply unit 300. Accordingly, different electrical adhesion may be generated in each area (240) and may be increased or decreased.

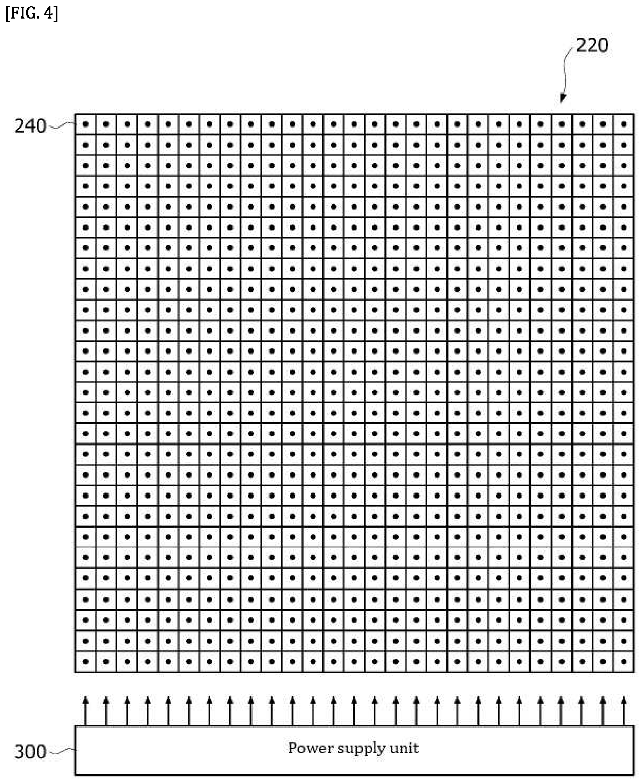

FIG. 4 is a diagram illustrating a zone of the electrostatic chuck 200 according to one embodiment of the present invention.

Referring to FIG. 4, the electrostatic chuck 200 may be divided in a grid shape on the touchpad 100, and each zone 240 may be formed in various shapes such as a square, a rectangle, or a circle.

The electrostatic chuck 200 may be formed over the entirety of each zone 240, but may be formed only in a portion of each zone 240, for example, only in the center of the zone 240.

The power may be supplied independently from the power supply unit 300 for each zone 240 of the electrostatic chuck 200. Therefore, the electrical adhesion may be independently adjusted for each zone 240 to form a variety of non-uniform textures.

The memory 400 may store various data used by the processor 500. The data may include instructions to perform operations or steps according to the embodiments of the present invention. That is, the memory 400 may store instructions that provide immersive tactile feedback to the user by adjusting the electrical adhesion between the touchpad 100 and the body part according to a position or pressure of the body part of the user.

The memory 400 may include at least one storage medium of a flash memory type memory, a hard disk type memory, a multimedia card micro type memory, a card type memory, a random access memory (RAM), a static random access memory (SRAM), a read-only memory (ROM), a programmable read-only memory (PROM), an erasable programmable read-only memory (EPROM), and an electrically erasable programmable read-only memory (EEPROM).

The processor 500 may be connected to the memory 400 and may execute the instructions stored in the memory 400. The processor 500 may execute the instructions stored in the memory 400 to control at least one other component (e.g., hardware or software component) connected to the processor 500 and perform various data processing or operations.

**In** addition, the processor 500 may be configured such that components for performing the respective functions are separately implemented at a hardware, software, or logic level. In these cases, dedicated hardware may be used to perform the respective functions. To this end, the processor 500 may be implemented as or may include at least one of an application specific integrated circuit (ASIC), a digital signal processor (DSP), programmable logic devices (PLD), field programmable gate arrays (FPGAs), a central processing unit (CPU), microcontrollers, and/or microprocessors.

The processor 500 may be implemented as a central processing unit (CPU) or a system on chip (SoC), may control a plurality of hardware or software components connected to the processor 500 by running an operating system or application, and may perform various data processing and operations. The processor 500 may be configured to execute at least one instruction stored in the memory 400 and store the execution result data in the memory 400.

The processor 500 may implement a screen upon execution of an application. In this process, the processor 500 detects the user's touch through the touchpad 100, and adjusts the power supply unit 300 based on the detection result to independently adjust the electrical adhesion for each zone 240 of the electrostatic chuck 200. For example, the processor 500 may control the power supply unit 300 to adjust the electrical adhesion of each zone 240 to various levels based on at least one of a pressure applied by the finger to the touchpad 100, a position of the finger within the touchpad 100, a movement direction of the body part with respect to the touchpad 100, a user interface component displayed through the touchpad 100 upon execution of an application, and a gesture of the finger on the touchpad 100, thereby supporting rich interaction scenarios for the application.

Specifically, the electrostatic chuck 200 may adjust the electrical adhesion between the touchpad 100 and the finger according to the pressure applied by the finger to the touchpad 100. That is, the electrical adhesion changes depending on a contact pressure of the user, and for example, the electrical adhesion of the electrostatic chuck 200 may increase as a contact pressure of the finger increases, and the electrical adhesion may decrease as the contact pressure of the finger decreases.

The processor 500 may adjust the electrical adhesion according to the position of the finger within the touchpad 100.

The processor 500 may adjust the electrical adhesion according to the movement direction of the body part with respect to the touchpad 100.

The processor 500 may adjust the electrical adhesion between the touchpad 100 and the body part according to the user interface component displayed through the touchpad 100 upon execution of an application. The user interface component allows the user to interact with a vehicle system. The user interface component may include, but is not particularly limited to, a button that allows the user to execute a specific operation by touching, an icon representing an object on the screen, an input field that allows the user to input text, a slider that is dragged left and right or up and down to adjust or select a specific value, a menu for functions or options, and a border of the screen.

The processor 500 may adjust the electrical adhesion according to the gesture of the finger on the touchpad 100. The gesture of the finger may include, but is not particularly limited thereto, a swipe of touching the touchpad 100 with a finger and then sweeping the same in a straight direction, a tap of touching the touchpad 100 short and light, a double tap of touching the touchpad 100 twice in succession, a press of long-pressing a screen, a flick of touching the touchpad 100 with the finger and quickly moving in one direction in a flicking manner, a pan of moving a scroll quickly or flipping a list, a drag of moving the finger toward the touchpad 100 slowly in various directions, a rotate of rotating two fingers in a clockwise direction or a counterclockwise direction in a state where the two fingers are simultaneously touched on the touchpad 100, and a pinch-to-zoom of touching the touchpad 100 with two fingers and then spreading or pinching the touchpad 100.

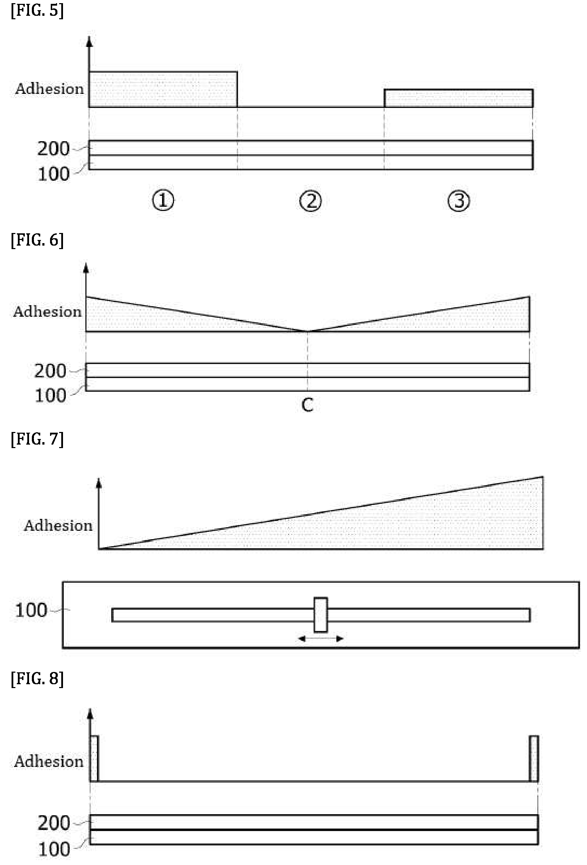

Hereinafter, examples of adjusting the electrical adhesion will be described with reference to FIGS. 5 to 8.

FIGS. 5 to 8 are diagrams illustrating examples of adjusting electrical adhesion according to one embodiment of the present invention.

FIG. 5 is a diagram illustrating an example of different electrical adhesion generated for each zone of the touchpad 100. In FIG. 5, when the touchpad 100 is divided into areas ①, ②, and ③, an example in which the electrical adhesion decreases in the order of area ①, area ③, and area ② is illustrated. This may be applied to a specific area in the screen, such as an input field, a button, or a boundary between items, to help the user easily recognize the specific area.

FIG. 6 is a diagram illustrating an example in which the electrical adhesion gradually increases toward both sides from the center of the touchpad 100. In FIG. 6, an example is illustrated in which a center C of the touchpad 100 has the lowest electrical adhesion and the electrical adhesion gradually increases toward both sides, so that the electrical adhesion is the strongest at a boundary portion of the touchpad 100. This may be applied upon swiping, thereby allowing the user to easily recognize the boundary of the screen.

FIG. 7 is a diagram illustrating an example in which the electrical adhesion increases according to movement of a slider. FIG. 7 illustrates an example in which the electrical adhesion gradually increases as the slide r moves. This may provide differentiated electrical adhesion according to a position of the slider, thereby allowing the user to accurately identify the level and reliably input a specific value even in situations where it is difficult to visually check the slider.

FIG. 8 is a diagram illustrating electrical adhesion generated at the boundary portion of the screen. FIG. 7 illustrates an example in which the electrical adhesion is maximized at the boundary portion of the screen. This allows the user to clearly recognize the boundary of the screen.

As described above, according to one embodiment of the present invention, the interface system for a vehicle may provide immersive haptic feedback to the user by generating electrostatic adhesion between a surface of the touchpad 100 and the body part of the user according to the position or pressure of the body part of the user, based on the Johnson-Rahbek effect.

According to one embodiment of the present invention, the interface system for a vehicle may adjust adhesion according to the position or pressure of the body part to allow the user to intuitively recognize a positional change such as cursor movement or slider adjustment.

According to one embodiment of the present invention, the interface system for a vehicle may reduce the need for visual check upon operation of the touchpad to allow the user to focus more on driving.

According to one embodiment of the present invention, the interface system for a vehicle may provide the user with rich interaction scenarios for various applications.

Although the present invention has been described with reference to the embodiments shown in the drawings, these are merely exemplary, and those skilled in the art will understand that various modifications and equivalent other embodiments are possible therefrom. Therefore, the true technical protection scope of the present invention should be defined by the following claims.

### [Description of Reference Numerals]

100: Touchpad
200: Electrostatic chuck
210: Semiconductor substrate
220: Metal electrode
230: Gap
300: Power supply unit
400: Memory
500: Processor

## Claims

1. An interface system for a vehicle, comprising:
a touchpad;
an electrostatic chuck that forms electrical adhesion between the touchpad and a body part;
a power supply unit that supplies electric power to the electrostatic chuck; and
a processor that detects the body part through the touchpad and supplies power to the electrostatic chuck through the power supply unit according to a detection result to form the electrical adhesion between the touchpad and the body part.

2. The interface system for a vehicle of claim 1, wherein the electrostatic chuck adjusts the electrical adhesion between the touchpad and the body part according to a pressure applied by the body part to the touchpad.

3. The interface system for a vehicle of claim 1, wherein the processor adjusts the electrical adhesion between the touchpad and the body part according to a gesture of the body part on the touchpad.

4. The interface system for a vehicle of claim 3, wherein the gesture of the body part includes at least one of a swipe, a tap, a double tap, a press, a flick, a pan, a drag, a rotate, and a pinch-to-zoom.

5. The interface system for a vehicle of claim 1, wherein the processor adjusts the electrical adhesion between the touchpad and the body part according to a position of the body part in the touchpad.

6. The interface system for a vehicle of claim 1, wherein the processor adjusts the electrical adhesion between the touchpad and the body part according to a movement direction of the body part with respect to the touchpad.

7. The interface system for a vehicle of claim 1, wherein the processor adjusts the electrical adhesion between the touchpad and the body part according to a user interface component displayed through the touchpad upon execution of an application.

8. The interface system for a vehicle of claim 7, wherein the user interface component includes at least one of a button, an icon, a menu, a slider, an input window, and a border displayed through the touchpad.

9. The interface system for the vehicle of claim 1, wherein the electrostatic chuck is disposed on the touchpad and divided into a plurality of zones, and
the processor selectively supplies power to the zones through the power supply unit to adjust the electrical adhesion between the touchpad and the body part for each of the zones.
